# DEMANDE DE BREVET EUROPEEN

(11) **EP 1 791 356 A2**
(43) Date de publication de la demande: **30.05.2007**
(21) Numéro de dépôt: 06291814.9
(22) Date de dépôt: 24.11.2006
(51) Int. Cl.: H04N 5/775, H04N 5/913, H04N 5/761

(54) **Procédé et système pour enregistrer un média depuis une "SetTopBox" vers un lecteur-enregistreur multimédia portable**

(30) Priorité: 24.11.2005 FR 0511915
(71) Demandeur: Archos, 91430 Igny (FR)
(72) Inventeur: Crohas, Henri, 91370 Verrieres-le-Buisson (FR)
(74) Mandataire: Pontet, Bernard

(57) **Abrégé**

Procédé et système pour enregistrer un média depuis une "SetTopBox" vers un lecteur-enregistreur multimédia portable.

L'invention concerne un procédé pour enregistrer un média depuis un terminal de réception de signaux multimédia de type "Set Top Box" vers un lecteur-enregistreur portable. Le procédé selon l'invention comprend les étapes suivantes :
- identification d'un créneau horaire dans lequel ledit média est accessible au sein du terminal,
- transmission des consignes d'enregistrement dudit média vers le lecteur-enregistreur au moyen d'une liaison numérique entre ledit terminal et le lecteur-enregistreur;
- transmission du média vers le lecteur-enregistreur pour un enregistrement en temps réel par le lecteur-enregistreur; le média étant transmis via une liaison média distincte de la liaison de transmission des consignes.

En particulier, la liaison numérique est une liaison série permettant la transmission de données éditoriales relatives au média enregistré.

## Description

La présente invention se rapporte à un procédé et un système pour enregistrer un média telle qu'une vidéo, depuis un terminal tel qu'une "SetTopBox", vers un lecteur-enregistreur multimédia portable.

Un terminal de type "SetTopBox" est un terminal tel qu'un décodeur satellite, câble, ADSL ou autre, pour la réception notamment de signaux télévisés. Un tel terminal est généralement connecté à un téléviseur dans lequel sont diffusés des programmes, des émissions de télévision ou de radio. Ce terminal peut aussi être connecté, de façon conventionnelle, à d'autres appareils de diffusion de média (vidéo, audio, données).

Le lecteur-enregistreur multimédia portable est un appareil portable, tenant dans la main, capable d'enregistrer et de diffuser de l'audio et de la vidéo. Il est conventionnellement doté d'un écran, de haut-parleurs, de moyens de stockage et de moyens logiciels. Un tel appareil est par exemple un des lecteurs de la marque ARCHOS® (AV700® ou autres). Généralement, un tel lecteur multimédia portable est associé à une station d'accueil ou "cradle" en langue anglaise, pour recevoir le lecteur pour une charge de batterie et/ou pour permettre une connexion à d'autres appareils tels qu'un terminal de type SetTopBox.

Pour permettre un enregistrement depuis le terminal, non-enregistreur, vers le lecteur portable, il faut régler le problème de synchronisation des deux appareils.

On connaît des systèmes dans lesquels le terminal commande le lecteur portable en envoyant des signaux de commandes analogiques dans des trames du signal vidéo analogique, ces trames sont invisibles à l'image. De tels systèmes restent complexes à mettre en oeuvre et offrent une communication limitée entre le lecteur portable et le terminal.

Un but de la présente invention est de proposer un nouveau système d'enregistrement simple à mettre en oeuvre et simple d'utilisation.

Un autre but de l'invention est d'améliorer la communication entre le terminal et le lecteur portable.

La présente invention a encore pour but un procédé d'enregistrement permettant d'enrichir les commandes envoyées par le terminal.

On atteint au moins l'un des objectifs précités avec un procédé pour enregistrer un média depuis un terminal de réception de signaux multimédia de type "Set Top Box" vers un lecteur-enregistreur portable, caractérisé en ce qu'il comprend les étapes suivantes :
- identification d'un créneau horaire dans lequel ledit média est accessible au sein du terminal,
- transmission des consignes d'enregistrement dudit média vers le lecteur-enregistreur au moyen d'une liaison numérique entre ledit terminal et le lecteur-enregistreur;
- transmission du média vers le lecteur-enregistreur pour un enregistrement en temps réel par le lecteur-enregistreur; le média étant transmis via une liaison média distincte de la liaison de transmission des consignes.

Le type de média généralement diffusé est un signal vidéo ou audio d'une émission de télévision ou de radio.

L'invention est notamment remarquable par le fait qu'elle propose de transférer des consignes ou commandes sous forme numériques, donc avec beaucoup de fiabilité, via une voie distincte de la voie de transfert du signal vidéo.

Par liaison, on entend une liaison logique permettant la communication entre deux entités. Par voie de transfert, on entend un canal réel ou virtuel pouvant être transporté seul ou avec d'autres voies de transfert distinctes sur une même liaison physique. La distinction entre les liaisons peut donc être une distinction purement logique. Le média peut être de type analogique ou numérique et transporté via un canal réel ou virtuel.

Plusieurs canaux virtuels peuvent partager le même moyen de communication physique. Par exemple, la même connexion Wifi peut être utilisée pour transmettre le canal virtuel distinct pour le média et le canal virtuel pour les consignes. Dans un autre exemple, la même connexion USB ou « FireWire » (IEEE1394) peut être utilisé pour transmettre à la fois les canaux virtuels des média et des consignes.

Avec le procédé selon l'invention, les consignes d'enregistrements sont transmises sur une voie différente de celle de transmission du média, qui est avantageusement de la vidéo. L'enregistrement vidéo est programmé dans le terminal, puis ce dernier commande en temps réel ou en différé l'enregistrement dans le lecteur-enregistreur.

Le fait d'avoir une seconde voie numérique de communication entre le terminal et le lecteur-enregistreur permet de transmettre des messages riches. En effet, selon la présente invention la liaison de transmission des consignes peut être une liaison s'appuyant sur un protocole riche et structuré. On peut notamment inclure dans les consignes des informations, éditoriales ou autres, relatives audit média. Par conséquent le terme "consignes" est à considérer au sens large. Ces consignes peuvent comprendre des commandes d'enregistrement mais également toute autre donnée notamment celles relatives au média à enregistrer. Le lecteur-enregistreur comprend des moyens logiciels permettant la réception et le traitement des consignes et du média éventuellement.

A titre d'exemple, ces consignes peuvent avantageusement comprendre un ordre temps réel "START" commandant le début de l'enregistrement et un ordre temps réel "STOP" commandant l'arrêt de l'enregistrement. Ce mode de réalisation est un mode temps réel dans lequel le terminal reste complètement maître des opérations. En particulier, l'ordre temps réel "START" peut être accompagné d'un ordre d'arrêt prédéterminé "TIMEOUT" permettant d'arrêter l'enregistrement après un temps prédéterminé. Ce temps prédéterminé peut correspondre à une durée maximum fixe indépendante du média et qui sert à interrompre l'enregistrement lorsque le lecteur-enregistreur n'a pas bien réceptionné l'ordre d'arrêt "STOP". Ce "TIMEOUT" peut donc être pré-établi dans le lecteur-enregistreur. Toutefois, ce temps prédéterminé "TIMEOUT" peut aussi correspondre sensiblement à la durée de diffusion du média; dans ce cas, on peut aussi envisager uniquement l'envoi de "START" et de "TIMEOUT".

Selon une variante avantageuse de l'invention, les consignes comprennent des données relatives au créneau horaire de la diffusion du média de façon à permettre au lecteur-enregistreur de gérer de façon indépendante en interne la période d'enregistrement du média transmis par le terminal. Ce mode consiste en un mode en différé, c'est à dire que l'utilisateur programme un ou une liste d'enregistrements à l'avance, le terminal transmet en particulier des données temporelles relatives au début et à la durée de ces enregistrements. Lorsque le média est accessible dans le terminal, par réception hertzienne, satellite, ADSL ou autres, le lecteur-enregistreur gère de façon indépendante l'enregistrement. Pour ce faire, le terminal et le lecteur enregistreur comportent des horloges synchronisées. Dans ce cas, il n'est pas nécessaire de transmettre les ordres "START" et "STOP".

Selon un mode de mise en oeuvre de l'invention, l'identification du créneau horaire consiste en une programmation de l'enregistrement à partir d'un guide électronique de programmes (EPG) au sein du terminal. Pour l'utilisateur, le gain de temps est considérable puisqu'il peut utiliser le guide des programmes habituel du terminal "SetTopBox" sur une télévision pour programmer l'enregistrement sans être obligé de manipuler le lecteur-enregistreur portable.

Le procédé selon l'invention peut aussi comprend en outre une mise à jour régulière, depuis le terminal vers le lecteur-enregistreur, des consignes d'enregistrement. Ceci est particulièrement avantageux lorsque l'on est en présence d'un guide de programmes pour lequel les chaînes de télévision mettent à jour des informations de déprogrammation ou décalage de programmes. La programmation de l'enregistrement ne reste donc pas figée, elle est dynamique puisque la liaison entre le terminal et le lecteur-enregistreur est dynamique.

Selon un mode de mise en oeuvre avantageux de l'invention, le lecteur-enregistreur enregistre et sécurise le média de façon à permettre ultérieurement une gestion des droits numériques. Pour sécuriser le média, on peut réaliser un chiffrement adapté dudit média à l'intérieur du lecteur-enregistreur. La gestion des droits numériques consiste notamment à n'autoriser la diffusion du média que sur ce lecteur-enregistreur, c'est à dire pas de transfert possible de contenu et/ou du droit de lecture vers d'autres lecteurs de média.

Les consignes peuvent comprennent un ordre pour modifier le niveau de sécurisation du média. Ces niveaux de sécurisation peuvent correspondre à des niveaux de sécurisation débrayée, allégée ou renforcée. Lorsqu'il s'agit d'un film par exemple, les droits à autoriser ou interdire sont par exemple :
- autorisation ou non d'exporter le film et le droit de lecture vers un autre lecteur vidéo portable, ordinateur ou tout autre lecteur vidéo; c'est à dire autorisation ou non de transférer un contenu sur une liaison numérique non protégée;
- autorisation ou non de jouer le contenu enregistré sur une sortie TV du lecteur-enregistreur; c'est à dire autorisation ou non de consommer un contenu sur une liaison analogique non protégée;
- autorisation limitée dans le temps pour la consommation du film; et
- nombre de lectures limitées.

De préférence, la liaison de transmission des consignes est une liaison série.

Cette liaison de transmission des consignes peut être une liaison filaire ou sans fil telle que le Wifi ou le Bluetooth.

Par ailleurs, cette liaison de transmission des consignes peut être une liaison unidirectionnelle. Dans ce cas, on peut envoyer les consignes de façon répétée afin d'assurer une plus grande fiabilité dans la liaison. La liaison de transmission des consignes peut aussi être une liaison bidirectionnelle permettant notamment la confirmation, par le lecteur-enregistreur, de l'exécution des ordres donnés par le terminal.

En complément notamment de ce qui précède, la liaison média peut être une liaison analogique ou numérique.

Suivant un autre aspect de l'invention, il est proposé un système pour enregistrer un média depuis un terminal de réception de signaux multimédia de type "Set Top Box" vers un lecteur-enregistreur portable. Selon l'invention, le système comprend :
- des moyens pour identifier un créneau horaire dans lequel ledit média est accessible au sein du terminal,
- une liaison numérique entre le terminal et le lecteur-enregistreur pour la transmission des consignes d'enregistrement du média vers le lecteur-enregistreur;
- une liaison média distincte de la liaison de transmission des consignes pour la transmission du média vers le lecteur-enregistreur en vue d'un enregistrement en temps réel par le lecteur-enregistreur.

Selon l'invention, le lecteur-enregistreur peut être connecté au terminal de façon directe ou via une station d'accueil par laquelle transitent la liaison média et la liaison de transmission des consignes.

D'autres avantages et caractéristiques de l'invention apparaîtront à l'examen de la description détaillée d'un mode de mise en oeuvre nullement limitatif, et des dessins annexés, sur lesquels :
- La figure 1 est une schématique du système selon l'invention;
- La figure 2 est une vue schématique d'un guide de programmes;
- La figure 3 est une vue simplifiée d'une fenêtre de navigation dans le lecteur portable; et
- La figure 4 est un aperçu d'un exemple de syntaxe de protocole de communication de la liaison série.

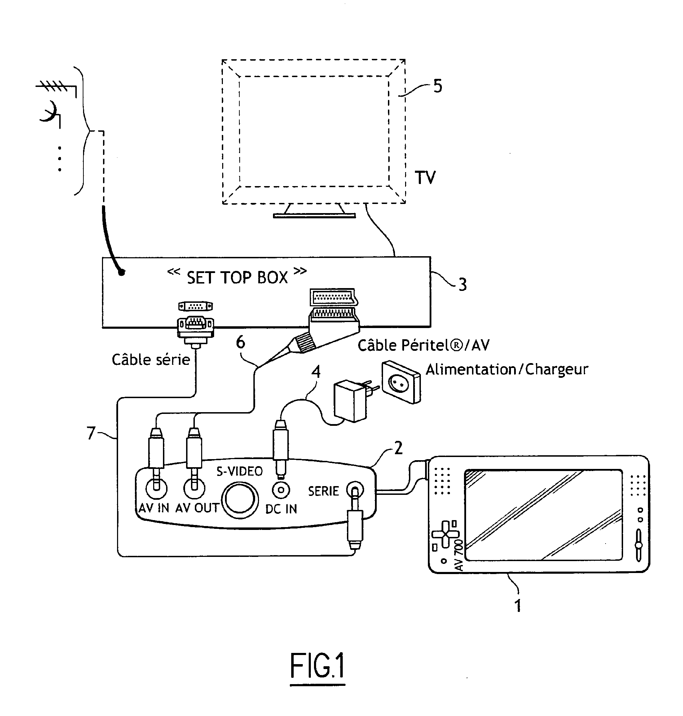

Sur la figure 1 on voit un lecteur portable 1 de type AV700 de la marque ARCHOS, qui est un lecteur multimédia portable doté de moyens d'enregistrement et de lecture de la vidéo notamment. Les moyens de stockages du lecteur sont suffisamment importants pour pouvoir stocker plusieurs heures de programmes. Ce lecteur portable est connecté à une station d'accueil 2 équipée de moyens de connexion aptes à permettre au lecteur portable 1 de communiquer avec un terminal 3 de type SetTopBox. D'une façon générale, la station d'accueil 2 peut servir de chargeur de batterie pour le lecteur portable 1. La station d'accueil comporte une sortie "DC IN" pour une alimentation en courant électrique via un câble d'alimentation 4.

Le terminal 3 peut être un décodeur TV équipé de manière conventionnelle pour recevoir des signaux TV en provenance d'une antenne hertzienne, d'une parabole, d'un câble, de l'ADSL via la ligne téléphonique, ou autre. Ce terminal 3 est relié à un téléviseur 5 de manière conventionnelle. Le système selon l'invention comporte deux liaisons entre la station d'accueil 2 et le terminal 3. La première liaison 6 est une liaison vidéo analogique par péritel® ou SCART. Une extrémité du câble 6 comporte une fiche péritel® connecté au terminal 3, l'autre extrémité comportant deux prises RCA connectées à deux connecteurs "AV IN" et "AV OUT" de la station d'accueil. Cette liaison 6 permet la transmission du signal vidéo depuis le terminal 3 vers le lecteur portable 1 via la station d'accueil 2.

La deuxième liaison 7 est une liaison série numérique permettant la communication entre le terminal et le lecteur portable via la station d'accueil 2. La liaison 7 autorise donc une communication numérique, bidirectionnelle avec un contenu riche.

Avec un tel système, l'utilisateur peut enregistrer plusieurs heures de programmes choisis d'un simple clic dans le guide des programmes du terminal 2. L'utilisateur peut ensuite emporter avec lui les programmes enregistrés et les visualiser en déplacement sur l'écran du lecteur portable ou sur un téléviseur.

Des moyens logiciels sont implémentés dans les appareils pour une bonne mise en oeuvre du procédé selon l'invention.

La figure illustre schématiquement un guide des programmes "EPG" (pour "Electronic Program Guide" en langue anglaise) dans lequel il est possible de programmer l'enregistrement d'un film vers un appareil externe, en l'occurrence vers le lecteur portable 1. Ainsi en programmant simplement son enregistrement dans le guide des programmes, le terminal se charge ensuite de communiquer au lecteur portable 1 les éléments nécessaires. L'utilisateur n'est donc plus obligé de programmer deux appareils. La programmation de l'enregistrement dans le guide des programmes se fait simplement à partir d'une télécommande 8 avec laquelle on sélectionne un film, le film B par exemple, et on sélectionne l'appareil destinataire, c'est à dire le lecteur portable 1. Le terminal 3 déclenchera, au moment venu, automatiquement l'enregistrement du film B sur le lecteur portable 1 en envoyant en temps réel les instructions de départ et d'arrêt d'enregistrement via la liaison numérique 7; le film B transitant via la liaison vidéo 6. On peut prévoir une programmation hebdomadaire. Le terminal peut aussi envoyer à l'avance une série de vidéo à enregistrer. Le lecteur reçoit alors par exemple les heures de début et de fin, charge à lui de s'activer automatiquement au moment venu pour réaliser l'enregistrement au bon moment.

Les informations transmises par le terminal 3 vers le lecteur portable peuvent être des informations éditoriales sur le programme à enregistrer, telles que le numéro de la chaîne diffusant le programme, le titre du programme, une description du programme, le type de programme, etc. Ces informations sont utilisées dans le lecteur portable pour :
- nommer le fichier d'enregistrement;
- ajouter ces informations en métadata dans le fichier enregistré, ces informations pouvant être le nom du réalisateur, le genre de programme, le nom des acteurs, un descriptif, une notation de l'éditeur etc;
- présenter le contenu vidéo à l'utilisateur par catégories; enregistrements de type "talk show", films d'aventure etc.

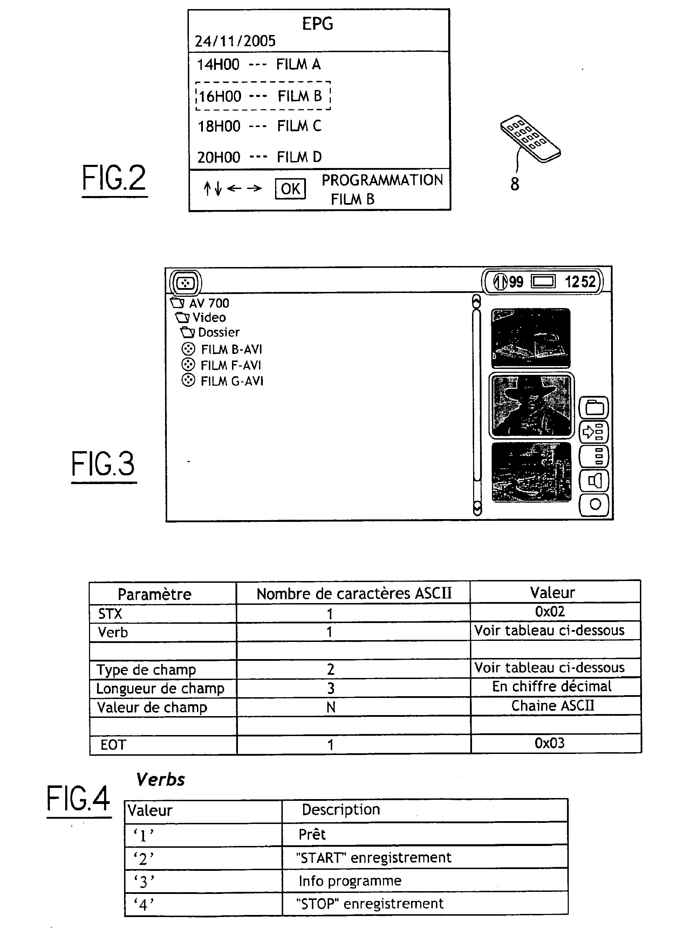

Sur la figure 3, on voit une fenêtre de navigation dans le lecteur portable 1. Le film B enregistré est répertorié dans un dossier de classement.

Sur la figure 4 on voit un aperçu sous forme de tableaux de la syntaxe du protocole de communication entre le terminal 3 et le lecteur portable via la liaison numérique 7. Cette illustration permet de voir qu'il s'agit d'un protocole riche et structuré. On voit la structure d'un paquet, chaque paquet commençant par "STX" (pour "start of text" en langue anglaise) et se terminant par "EOT" ("end of text" en langue anglaise).

Bien sûr, l'invention n'est pas limitée aux exemples qui viennent d'être décrits et de nombreux aménagements peuvent être apportés à ces exemples sans sortir du cadre de l'invention. Notamment, par « Set Top Box », on entend toute entité qui, prise seule ou en combinaison, constitue une source de média. Cette entité peut avoir accès, via un adaptateur ou directement à des serveurs de média locaux ou distants. Elle peut être un adaptateur pour télévision sur IP, un boîtier ADSL, un ordinateur utilisé comme serveur multimédia ou d'une façon générale tout serveur distant connecté au lecteur portable directement ou indirectement par des moyens filaires (tels que le câble), sans fils (tels que Wimax) ou des moyens utilisant des fibres optiques.... Par ailleurs, les moyens utilisés pour l'enregistrement peuvent également être avantageusement utilisés pour relire au moins les enregistrements effectués et plus généralement tout média stocké dans le lecteur-enregistreur portable.

## Revendications

1. Procédé pour enregistrer un média depuis un terminal de réception de signaux multimédia de type "Set Top Box" vers un lecteur-enregistreur portable, **caractérisé en ce qu'**il comprend les étapes suivantes :
- identification d'un créneau horaire dans lequel ledit média est accessible au sein du terminal,
- transmission des consignes d'enregistrement dudit média vers le lecteur-enregistreur au moyen d'une liaison numérique entre ledit terminal et le lecteur-enregistreur;
- transmission du média vers le lecteur-enregistreur pour un enregistrement en temps réel par le lecteur-enregistreur; le média étant transmis via une liaison média distincte de la liaison de transmission des consignes.

2. Procédé selon la revendication 1, **caractérisé en ce que** la liaison de transmission des consignes est une liaison s'appuyant sur un protocole riche et structuré.

3. Procédé selon la revendication 2, **caractérisé en ce que** les consignes comprennent des informations éditoriales relatives audit média.

4. Procédé selon l'une quelconque des revendications précédentes, **caractérisé en ce que** l'identification du créneau horaire consiste en une programmation de l'enregistrement à partir d'un guide électronique de programmes au sein du terminal.

5. Procédé selon l'une quelconque des revendications précédentes, **caractérisé en ce qu'**il comprend en outre une mise à jour régulière, depuis le terminal vers le lecteur-enregistreur, des consignes d'enregistrement.

6. Procédé selon l'une quelconque des revendications précédentes, **caractérisé en ce que** les consignes comprennent un ordre temps réel "START" commandant le début de l'enregistrement et un ordre temps réel "STOP" commandant l'arrêt de l'enregistrement.

7. Procédé selon l'une quelconque des revendications précédentes, **caractérisé en ce que** les consignes comprennent ensemble avec un ordre temps réel "START" commandant le début de l'enregistrement, un ordre d'arrêt prédéterminé "TIMEOUT" permettant d'arrêter l'enregistrement après un temps prédéterminé.

8. Procédé selon l'une quelconque des revendications 1 à 5, **caractérisé en ce que** les consignes comprennent des données relatives au créneau horaire de la diffusion du média de façon à permettre au lecteur-enregistreur de gérer de façon indépendante en interne la période d'enregistrement du média transmis par le terminal.

9. Procédé selon l'une quelconque des revendications précédentes, **caractérisé en ce que** le lecteur-enregistreur enregistre et sécurise le média de façon à permettre ultérieurement une gestion des droits numériques.

10. Procédé selon la revendication 9, **caractérisé en ce que**, pour sécuriser le média, on réalise un chiffrement dudit média.

11. Procédé selon la revendication 9 ou 10, **caractérisé en ce que** les consignes comprennent un ordre pour modifier le niveau de sécurisation du média.

12. Procédé selon l'une quelconque des revendications précédentes, **caractérisé en ce que** la liaison de transmission des consignes est une liaison série.

13. Procédé selon l'une quelconque des revendications précédentes, **caractérisé en ce que** la liaison de transmission des consignes est une liaison filaire.

14. Procédé selon l'une quelconque des revendications 1 à 12, **caractérisé en ce que** la liaison de transmission des consignes est une liaison sans fil.

15. Procédé selon l'une quelconque des revendications précédentes, **caractérisé en ce que** la liaison de transmission des consignes est une liaison unidirectionnelle.

16. Procédé selon la revendication 15, **caractérisé en ce que** qu'on envoie lesdites consignes de façon répétée.

17. Procédé selon l'une quelconque des revendications 1 à 14, **caractérisé en ce que** la liaison de transmission des consignes est une liaison bidirectionnelle.

18. Procédé selon l'une quelconque des revendications précédentes, **caractérisé en ce que** la liaison média est une liaison analogique.

19. Procédé selon l'une quelconque des revendications 1 à 17, **caractérisé en ce que** la liaison média est une liaison numérique.

20. Procédé selon l'une quelconque des revendications précédentes, **caractérisé en ce que** le lecteur-enregistreur est connecté à une station d'accueil via laquelle transitent la liaison média et la liaison de transmission des consignes.

21. Système pour enregistrer un média depuis un terminal de réception de signaux multimédia de type "Set Top Box" vers un lecteur-enregistreur portable, **caractérisé en ce qu'**il comprend :
- des moyens pour identifier un créneau horaire dans lequel ledit média est accessible au sein du terminal,
- une liaison numérique entre le terminal et le lecteur enregistreur pour la transmission des consignes d'enregistrement du média vers le lecteur-enregistreur;
- une liaison média distincte de la liaison de transmission des consignes pour la transmission du média vers le lecteur enregistreur en vue d'un enregistrement en temps réel par le lecteur-enregistreur.

22. Système selon la revendication 21, **caractérisé en ce que** la liaison de transmission des consignes est une liaison série.

23. Système selon la revendication 21 ou 22, **caractérisé en ce que** la liaison de transmission des consignes est une liaison filaire.

24. Système selon la revendication 21 ou 22, **caractérisé en ce que** la liaison de transmission des consignes est une liaison sans fil.

25. Système selon l'une quelconque des revendications 21 à 24, **caractérisé en ce que** la liaison de transmission des consignes est une liaison unidirectionnelle.

26. Système selon l'une quelconque des revendications 21 à 24, **caractérisé en ce que** la liaison de transmission des consignes est une liaison bidirectionnelle.

27. Système selon l'une quelconque des revendications 21 à 26, **caractérisé en ce que** la liaison média est une liaison analogique.

28. Système selon l'une quelconque des revendications 21 à 26, **caractérisé en ce que** la liaison média est une liaison numérique.
